# EUROPÄISCHE PATENTSCHRIFT

(11) **EP 3 981 996 B1**
(45) Veröffentlichungstag und Bekanntmachung des Hinweises auf die Patenterteilung: **16.08.2023**
(21) Anmeldenummer: 21195548.9
(22) Anmeldetag: 08.09.2021
(51) Int. Cl.: F16D 48/02, F16D 48/06

(54) **ANORDNUNG ZUM LÖSEN EINER KUPPLUNGSVERBINDUNG EINES HYDRAULISCHEN SCHNELLKUPPLERS**
ASSEMBLY FOR RELEASING A COUPLING CONNECTION OF A HYDRAULIC QUICK COUPLER
AGENCEMENT DE LIBÉRATION D'UNE LIAISON D'ACCOUPLEMENT D'UN DISPOSITIF HYDRAULIQUE D'ACCOUPLEMENT RAPIDE

(30) Priorität: 29.09.2020 DE 102020125415
(43) Veröffentlichungstag der Anmeldung: 13.04.2022
(73) Patentinhaber: Deere & Company, Moline, IL 61265 (US)
(72) Erfinder: GREIF, Felix P., 68163 Mannheim (DE); TRINLER, Martin, 68163 Mannheim (DE); ZLAUGOTNIS, Andreas, 68163 Mannheim (DE)
(74) Vertreter: Dehnhardt, Florian Christopher

(56) Entgegenhaltungen:
- US-A- 5 655 983
- US-A- 6 112 874
- US-A1- 2003 010 196
- US-A1- 2006 105 883
- US-A1- 2011 202 232
- US-A1- 2012 031 086
- US-B2- 8 939 268
- US-B2- 10 711 846

## Beschreibung

Die Erfindung bezieht sich auf eine Anordnung zum Lösen einer Kupplungsverbindung eines hydraulischen Schnellkupplers, mit einer Hydraulikkupplung zur Aufnahme eines Hydrauliksteckers, wobei die Hydraulikkupplung ein Kupplergehäuse sowie eine darin verschiebbar gelagerte Kupplerpatrone aufweist, die beim Einstecken des Hydrauliksteckers eine die Hydraulikkupplung verriegelnde Betriebsposition einnimmt.

Derartige hydraulische Schnellkuppler (siehe US 10 711 846 B2) sind an landwirtschaftlichen Traktoren insbesondere Bestandteil von in dessen Heckbereich vorgesehenen hydraulischen Steuergeräten (SCVs), an denen sich hydraulisch betriebene Aggregate landwirtschaftlicher Arbeitsgeräte anschließen lassen. Jedes der hydraulischen Steuergeräte ist dabei mit einem Schnellkupplerpaar ausgestattet, dessen beide Schnellkuppler wahlweise einen Zu- oder Rücklauf für Hydraulikflüssigkeit bilden. Die über zugehörige Hydraulikstecker bzw. -schläuche an den hydraulischen Schnellkupplern anschließbaren hydraulisch betriebenen Aggregate dienen dabei der Ausführung diverser Betriebs- bzw. Arbeitsfunktionen der landwirtschaftlichen Arbeitsgeräte. Bei den landwirtschaftlichen Arbeitsgeräten kann es sich um getragene Anbaugeräte, die an einem Dreipunkt-Kraftheber des landwirtschaftlichen Traktors eingehängt sind, oder aber um gezogene Arbeitsgeräte handeln. Letztere sind mittels einer mechanischen Anhängeverbindung an dem landwirtschaftlichen Traktor angebracht, so zum Beispiel mittels einer Zugdeichsel, die über eine verschließbare Kugelkupplung an einer Kupplungskugel des landwirtschaftlichen Traktors eingehängt wird. Bei den gezogenen Arbeitsgeräten kann es sich unter anderem um Ladewagen, Transportanhänger oder auch diverse Bodenbearbeitungsmaschinen handeln, die mit hydraulisch betriebenen Aggregaten wie Rotationsantrieben, Hydraulikzylindern oder Erntegutfördereinrichtungen ausgestattet sind.

Die hydraulischen Schnellkuppler dienen der Herstellung einer sogenannten Push-Pull-Verbindung beim Einstecken des jeweiligen Hydrauliksteckers. Hierzu ist die Kupplerpatrone entgegen einer zentrierenden Federkraft aus einer Betriebsposition heraus in Einsteckrichtung ("Push") bzw. in Abziehrichtung ("Pull") des Hydrauliksteckers axial auslenkbar innerhalb des Kupplergehäuses gelagert. Die Kupplerpatrone ist somit mit der Steck- bzw. Abziehrichtung des Hydrauliksteckers korrespondierend axial verschiebbar in dem Kupplergehäuse aufgenommen. Die Kupplerpatrone trägt einen Kugelkranz, dessen Kugeln derart mit einer an dem Kupplergehäuse ausgebildeten Innenkontur zusammenwirken, dass diese in der Betriebsposition der Kupplerpatrone arretierend in eine an dem Hydraulikstecker umlaufende Nut eingreifen, jedoch beim Einstecken bzw. Abziehen des Hydrauliksteckers durch Verschieben der Kupplerpatrone aus der Betriebsposition heraus in einer demgegenüber eingerückten Übergangsposition bzw. ausgerückten Auswurfposition freigegeben werden.

Gerade die zum Abziehen des Hydrauliksteckers aufzubringende Handkraft ist vergleichsweise hoch, sodass an dem Kupplergehäuse meist ein manuell betätigbarer Auswurfhebel vorgesehen ist, mittels dessen eine in Abziehrichtung des Hydrauliksteckers wirkende Kraft auf die Kupplerpatrone ausübbar ist. Je nach Übersetzungsverhältnis des Auswurfhebels lässt sich die Durchführung des Abziehvorgangs hierdurch mehr oder minder unterstützen.

Die Funktion des vorstehend beschriebenen Push-Pull-Mechanismus stellt zudem sicher, dass sich die Kupplungsverbindung auch dann löst, wenn eine auf den Hydraulikstecker bzw. einen daran befindlichen Hydraulikschlauch wirkende Zugkraft einen bestimmten Betrag überschreitet. Auf diese Weise ist eine Abreißsicherung verwirklicht, die unter anderem verhindert, dass es beim Verlust der mechanischen Anhängeverbindung zwischen landwirtschaftlichem Traktor und gezogenem Arbeitsgerät zu einer überlastbedingten Beschädigung des Hydraulikschlauchs sowie in der Folge zu einer Freisetzung von Hydraulikflüssigkeit kommt. Um ein definiertes Lösen der Kupplungsverbindung sicherzustellen, ist es erforderlich, dass die Zugkraft möglichst axial zur Kupplerpatrone verläuft. Dies ist in der Praxis meist nicht der Fall, sodass das Auslöseverhalten abhängig von der Position und Ausrichtung des gezogenen Arbeitsgeräts gegenüber dem landwirtschaftlichen Traktor unvorhersehbar variiert, mithin ein sicheres bzw. rechtzeitiges Lösen der Kupplungsverbindung unter ungünstigen Umständen nicht gewährleistet ist.

Angesichts dessen ist es Aufgabe der vorliegenden Erfindung, eine Anordnung der eingangs genannten Art dahingehend auszubilden, dass ein gleichbleibendes bzw. reproduzierbares Auslöseverhalten des hydraulischen Schnellkupplers verwirklichbar ist.

Diese Aufgabe wird durch eine Anordnung zum Lösen einer Kupplungsverbindung eines hydraulischen Schnellkupplers mit den Merkmalen des Patentanspruchs 1 gelöst.

Die Anordnung zum Lösen einer Kupplungsverbindung eines hydraulischen Schnellkupplers umfasst eine Hydraulikkupplung zur Aufnahme eines Hydrauliksteckers, wobei die Hydraulikkupplung ein Kupplergehäuse sowie eine darin verschiebbar gelagerte Kupplerpatrone aufweist, die beim Einstecken des Hydrauliksteckers eine die Hydraulikkupplung verriegelnde Betriebsposition einnimmt. Ferner ist eine Betätigungsanordnung vorhanden, mittels derer die Kupplerpatrone auf Veranlassung einer Steueranordnung fremdkraftbetätigt aus der Betriebsposition in eine den Hydraulikstecker freigebende Auswurfposition verbringbar ist.

Aufgrund der Fremdkraftbetätigung der Kupplerpatrone lässt sich ein zugkraftunabhängiges, mithin gleichbleibendes bzw. reproduzierbares Auslöseverhalten des hydraulischen Schnellkupplers verwirklichen.

Vorteilhafte Ausgestaltungen der erfindungsgemäßen Anordnung gehen aus den Unteransprüchen hervor.

Gemäß dem Gegenstand des Anspruchs 1 umfasst die Betätigungsanordnung einen druckbeaufschlagbaren Steuerraum, in dem die Kupplerpatrone derart gelagert ist, dass sich diese durch Druckaufbau innerhalb des Steuerraums in die Auswurfposition drängen lässt. Der Steuerraum kann in diesem Fall baulich in das Kupplergehäuse integriert sein, wobei die Kupplerpatrone einen an den Steuerraum angrenzenden druckbetätigbaren Kolben bildet. Dies führt zu einem besonders kompakten Aufbau der Betätigungsanordnung. Der Druckaufbau innerhalb des Steuerraums erfolgt hydraulisch und liegt typischerweise in der Größenordnung von 1 bis 2 bar. Besonders kurze Auslösezeiten lassen sich für den Fall erreichen, dass sich zum Druckaufbau ein mittels einer Druckquelle vorspannbarer Membranspeicher über ein von der Steueranordnung auslösbares Aktivierungsventil mit dem Steuerraum der Betätigungsanordnung druckverbinden lässt. Die Entladung des Membranspeichers in den Steuerraum erfolgt in diesem Fall unmittelbar mit Öffnen des Aktivierungsventils, sodass ein weitgehend verzögerungsfreies Auswerfen des Hydrauliksteckers gewährleistet ist. Bei weniger kritischen Anforderungen an die Auslösezeiten ist anstelle des Membranspeichers auch die Verwendung einer elektrisch angetriebenen Pumpe zum Zwecke des Druckaufbaus denkbar. Das Aktivierungsventil kann in diesem Fall entfallen.

Ferner besteht die Möglichkeit, dass in den Steuerraum erste und zweite Leitungen münden, wobei sich die erste Leitung als Zulauf über ein Drosselventil sowie das Aktivierungsventil mit dem Membranspeicher und die zweite Leitung als Rücklauf über ein Ablassventil mit einem Hydraulikreservoir druckverbinden lässt. Zum Druckaufbau innerhalb des Steuerraums wird einerseits der durch die erste Leitung gebildete Zulauf durch Öffnen des Aktivierungsventils freigegeben sowie andererseits der durch die zweite Leitung gebildete Rücklauf durch Schließen des Ablassventils gesperrt. Das Drosselventil dient hierbei der gezielten Begrenzung des im Steuerraum beim Öffnen des Aktivierungsventils aufgebauten Druckgradienten, mithin der beim Auswerfen des Hydrauliksteckers auftretenden kinetischen Energie.

Dabei kann das Ablassventil mittels eines beim Auslösen des Aktivierungsventils am Drosselventil auftretenden Differenzdrucks derart betätigt werden, dass der durch die zweite Leitung gebildete Rücklauf in Richtung des Hydraulikreservoirs geschlossen wird. Das Ablassventil ist in einem solchen Fall druckbetätigbar ausgebildet, wobei sich durch Nutzung des über das Drosselventil auftretenden Differenzdrucks als Steuergröße ein besonders einfacher Aufbau der Betätigungsanordnung ergibt.

Gemäß einer weiteren Ausgestaltung der erfindungsgemäßen Anordnung ist es auch vorstellbar, dass sich die Kupplerpatrone mittels eines von der Betätigungsanordnung umfassten elektrischen Stellgebers in die Auswurfposition drängen lässt. Der elektrische Stellgeber kann eine mit der Kupplerpatrone in Verbindung stehende Polstange aufweisen, die die Kupplerpatrone durch entsprechende Bestromung einer die Polstange koaxial umgebenden Magnetspule in Richtung der Auswurfposition auslenkt.

Um den Bediener bei der Herstellung der Kupplungsverbindung aktiv zu unterstützen, besteht zudem die Möglichkeit, dass die Betätigungsanordnung einen weiteren elektrischen Stellgeber aufweist, mittels dessen sich die Kupplerpatrone in eine beim Einstecken des Hydrauliksteckers zu überwindende Übergangsposition drängen lässt. Der weitere elektrische Stellgeber umfasst zu diesem Zweck eine weitere Magnetspule, die ihrerseits die Polstange koaxial umgibt und diese mitsamt der Kupplerpatrone durch entsprechende Bestromung unter Verringerung der aufzubringenden Steckkraft in Richtung der Übergangsposition auslenkt. Die Ansteuerung des weiteren elektrischen Stellgebers erfolgt beispielsweise seitens der Steueranordnung bei Erkennung eines über ein Eingabeelement geäußerten Bedienerwunsches. Bei dem Eingabeelement handelt es sich beispielweise um einem im Bereich zugehöriger Steuergeräte eines landwirtschaftlichen Traktors angeordneten Taster, dessen Betätigungssignale einer Kontrolleinheit zur Ansteuerung des weiteren elektrischen Stellgebers zugeführt werden.

Bezüglich der Bedeutung der Betriebs-, Auswurf- und Übergangsposition der innerhalb des Kupplergehäuses verschiebbar gelagerten Kupplerpatrone sei zur Vermeidung von Wiederholungen auf die Funktion des eingangs beschriebenen Push-Pull-Mechanismus verwiesen.

Zur Verwirklichung einer Abreißsicherung kann die Steueranordnung die Betätigungsanordnung nach Maßgabe eines auf eine drohende mechanische Überlastung der Kupplungsverbindung hinweisenden Auslösebefehls ansteuern. Die Ansteuerung erfolgt in diesem Fall automatisiert, sodass ein verlässlicher Schutz eines angeschlossenen Hydraulikschlauchs vor übermäßigen Zugkräften sichergestellt ist.

Um den Hydraulikschlauch zusätzlich zu schonen, erfolgt die Erfassung eines drohenden Abreißens möglichst bereits vor dem Auftreten der damit in Zusammenhang stehenden Zugkräfte. Im Falle einer zwischen einem landwirtschaftlichen Traktor und einem gezogenen Arbeitsgerät hergestellten Kupplungsverbindung besteht die Möglichkeit, dass die Erzeugung des Auslösebefehls seitens der Steueranordnung in Abhängigkeit eines sensorisch erfassten Kupplungszustands einer mechanischen Anhängeverbindung zwischen dem landwirtschaftlichen Traktor und dem gezogenen Arbeitsgerät erfolgt.

Je nach Ausbildung der Betätigungsanordnung kann der Auslösebefehl auf unterschiedlichem Wege unter Verwendung mechanischer, elektromechanischer und/oder elektronischer Komponenten der Steueranordnung erzeugt werden.

Handelt es sich bei der Betätigungsanordnung entsprechend der ersten Ausgestaltung der erfindungsgemäßen Anordnung um ein Aktivierungsventil, so ist dessen rein mechanische Auslösung mittels eines Zugkabels, das zwischen landwirtschaftlichem Traktor und gezogenem Arbeitsgerät verläuft, vorstellbar. Das Zugkabel ist dabei mit einem seiner Enden fest an dem gezogenen Arbeitsgerät montiert, wobei dessen freies Ende an einem zur Auslösung des Aktivierungsventils vorgesehenen Betätiger am landwirtschaftlichen Traktor eingehängt ist. Alternativ kann die Steueranordnung auch eine Kombination eines Zugkabels sowie eines darüber betätigbaren Schalters, eines kontaktlosen Abstandssensors zur Erkennung einer Abstandsüberschreitung zwischen landwirtschaftlichem Traktor und gezogenem Arbeitsgerät in Gestalt eines Radar- oder Ultraschallsensors, einer Kamera oder dergleichen umfassen. Die von dem Schalter bzw. den Abstandssensoren bereitgestellten Informationen werden hierbei von einer von der Steueranordnung umfassten Kontrolleinheit ausgewertet sowie je nach Ausgestaltung der erfindungsgemäßen Anordnung in einen zur Auslösung des Aktivierungsventils bzw. der Ansteuerung des elektrischen Stellgebers geeigneten Auslösebefehl umgesetzt. Die Auslösung des Aktivierungsventils kann hierbei mittels einer von der Kontrolleinheit elektrisch betätigbaren Magnetspule erfolgen.

Die erfindungsgemäße Anordnung lässt sich - abgesehen von der Verwirklichung einer verbesserten Abreißsicherung - auch dahingehend nutzen, einen Bediener beim Lösen der Kupplungsverbindung aktiv zu unterstützen. Hierzu kann die Betätigungsanordnung zusätzlich auf Wunsch des Bedieners manuell ansteuerbar sein. Die Ansteuerung kann in diesem Fall bei Erkennung eines über ein Eingabeelement geäußerten Bedienerwunsches erfolgen, über das ein entsprechender Auslösebefehl unabhängig vom Eingreifen der Abreißsicherung erzeugbar ist. Bei dem Eingabeelement handelt es sich beispielweise um einen im Bereich zugehöriger Steuergeräte angeordneten Taster, dessen Betätigungssignale der Kontrolleinheit zur Erzeugung des an die Betätigungsanordnung zu übermittelnden Auslösebefehls zugeführt werden. In diesem Fall erübrigt sich die Verwendung eines Auswurfhebels, wie er bei gängigen Schnellkupplern vorgesehen ist.

Die erfindungsgemäße Anordnung zum Lösen einer Kupplungsverbindung eines hydraulischen Schnellkupplers wird im Folgenden anhand der beigefügten Zeichnungen eingehend erläutert. Dabei sind hinsichtlich ihrer Funktion übereinstimmende bzw. vergleichbare Komponenten mit denselben Bezugszeichen gekennzeichnet. Es zeigen:
- Fig. 1: eine schematische Darstellung der mit einer Abreißsicherung ausgestatteten erfindungsgemäßen Anordnung entsprechend einer ersten Ausgestaltung,
- Fig. 2: die in Fig. 1 dargestellte Ausgestaltung der erfindungsgemäßen Anordnung beim Auslösen der Abreißsicherung,
- Fig. 3: eine schematische Darstellung der mit einer Abreißsicherung ausgestatteten erfindungsgemäßen Anordnung entsprechend einer zweiten Ausgestaltung, und
- Fig. 4: eine Variante der in Fig. 3 dargestellten zweiten Ausgestaltung der erfindungsgemäßen Anordnung.

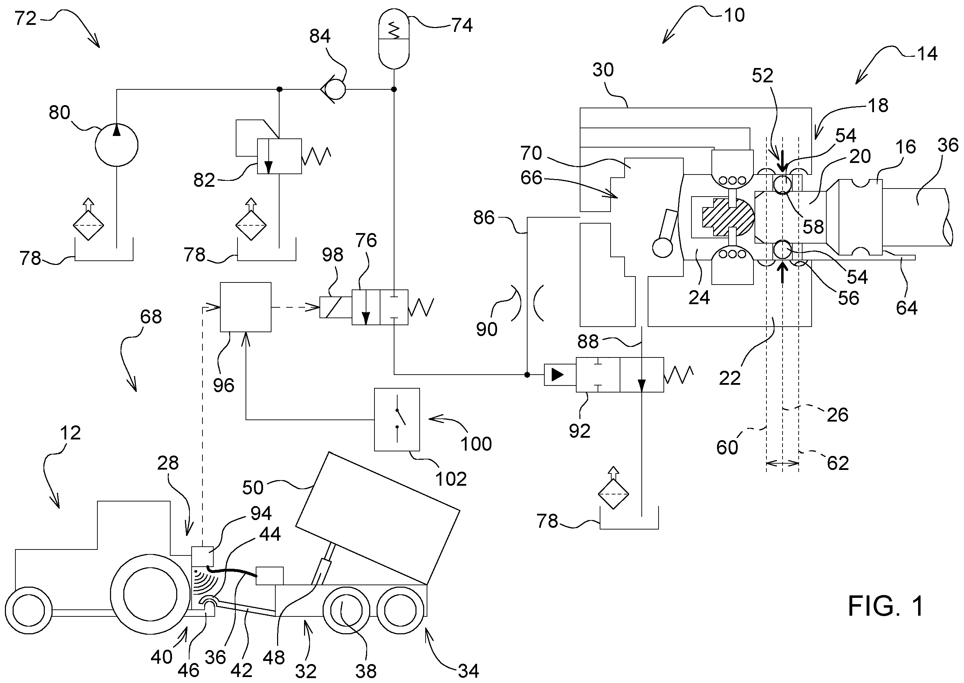

Fig. 1 zeigt eine schematische Darstellung der erfindungsgemä-ßen Anordnung entsprechend einer ersten Ausgestaltung.

Die Anordnung 10 ist vorliegend Bestandteil eines landwirtschaftlichen Traktors 12 und umfasst einen hydraulischen Schnellkuppler 14, der der Herstellung einer Kupplungsverbindung mit einem Hydraulikstecker 16 dient. Der Schnellkuppler 14 weist hierzu eine Hydraulikkupplung 18 zur Aufnahme des Hydrauliksteckers 16 im Bereich eines Kupplungsabschnitts 20 auf. Die Hydraulikkupplung 18 umfasst ein Kupplergehäuse 22 sowie eine darin verschiebbar gelagerte Kupplerpatrone 24, die beim Einstecken des Hydrauliksteckers 16 eine die Hydraulickupplung 18 verriegelnde Betriebsposition 26 einnimmt.

Der hydraulische Schnellkuppler 14 ist Bestandteil eines im Heckbereich 28 des landwirtschaftlichen Traktors 12 vorgesehenen hydraulischen Steuergeräts 30. An dem hydraulischen Steuergerät 30 ist ein hydraulisch betriebenes Aggregat 32 eines landwirtschaftlichen Arbeitsgeräts 34 mittels des Hydrauliksteckers 16 bzw. eines daran befindlichen Hydraulikschlauchs 36 angeschlossen, um eine zugehörige Betriebs- bzw. Arbeitsfunktion des landwirtschaftlichen Arbeitsgeräts 34 auszuführen.

Entgegen der Darstellung in Fig. 1 ist das hydraulische Steuergerät 30 mit einem Schnellkupplerpaar ausgestattet, dessen beide Schnellkuppler wahlweise einen Zu- oder Rücklauf für Hydraulikflüssigkeit bilden. Da die Funktion der Anordnung 10 für jeden der Schnellkuppler identisch ist, soll diese nachfolgend anhand des einzelnen Schnellkupplers 14 erläutert werden.

Beispielsgemäß handelt es sich bei dem landwirtschaftlichen Arbeitsgerät 34 um ein gezogenes Arbeitsgerät in Gestalt eines Ladewagens 38. Der Ladewagen 38 ist mittels einer mechanischen Anhängeverbindung 40 an dem landwirtschaftlichen Traktor 12 angebracht, vorliegend mittels einer Zugdeichsel 42, die über eine verschließbare Kugelkupplung 44 an einer Kupplungskugel 46 des landwirtschaftlichen Traktors 12 eingehängt ist. Das als Hydraulikzylinder 48 ausgebildete hydraulisch betriebene Aggregat 32 dient dem Kippen einer Ladefläche 50 des Ladewagens 38. Neben dem Hydraulikzylinder 48 sind noch weitere hydraulisch betriebene Aggregate, wie ein Rotationsantrieb für angetriebene Räder des Ladewagens 38 oder eine Erntegutfördereinrichtung zum Einzug von stängelförmigem Schnittgut vorhanden. Diese sind an weiteren hydraulischen Steuerventilen bzw. Schnellkupplern des landwirtschaftlichen Traktors 12 angeschlossen. Auch diese sind Bestandteil der Anordnung 10, aus Gründen der Übersichtlichkeit in Fig. 1 jedoch nicht dargestellt.

Der hydraulische Schnellkuppler 14 dient der Herstellung einer sogenannten Push-Pull-Verbindung beim Einstecken des Hydrauliksteckers 16. Hierzu ist die Kupplerpatrone 24 entgegen einer zentrierenden Federkraft aus der Betriebsposition 26 heraus in Einsteckrichtung ("Push") bzw. in Abziehrichtung ("Pull") des Hydrauliksteckers 16 axial auslenkbar innerhalb des Kupplergehäuses 22 gelagert. Die Kupplerpatrone 24 ist somit mit der Steck- bzw. Abziehrichtung des Hydrauliksteckers 16 korrespondierend axial verschiebbar innerhalb des Kupplergehäuses 22 aufgenommen. Die Kupplerpatrone 24 trägt einen Kugelkranz 52, dessen Kugeln 54 derart mit einer an dem Kupplergehäuse 22 ausgebildeten Innenkontur 56 zusammenwirken, dass diese in der Betriebsposition 26 der Kupplerpatrone 24 arretierend in eine an dem Hydraulikstecker 16 umlaufende Nut 58 eingreifen, jedoch beim Einstecken bzw. Abziehen des Hydrauliksteckers 16 durch Verschieben der Kupplerpatrone 24 aus der Betriebsposition 26 heraus in einer demgegenüber eingerückten Übergangsposition 60 bzw. ausgerückten Auswurfposition 62 freigegeben werden.

Da die zum Abziehen des Hydrauliksteckers 16 aufzubringende Handkraft vergleichsweise hoch ist, ist an dem Kupplergehäuse 22 ein manuell betätigbarer Auswurfhebel 64 vorgesehen, mittels dessen eine in Abziehrichtung des Hydrauliksteckers 16 wirkende Kraft auf die Kupplerpatrone 24 ausübbar ist. Je nach Übersetzungsverhältnis des Auswurfhebels 64 lässt sich die Durchführung des Abziehvorgangs hierdurch mehr oder minder unterstützen.

Des Weiteren umfasst die Anordnung 10 eine Betätigungsanordnung 66, mittels derer die Kupplerpatrone 24 auf Veranlassung einer Steueranordnung 68 fremdkraftbetätigt aus der Betriebsposition 26 entgegen der zentrierenden Federkraft in die den Hydraulikstecker 16 freigebende Auswurfposition 62 verbringbar ist.

Gemäß der in Fig. 1 wiedergegebenen ersten Ausgestaltung der Anordnung 10 umfasst die Betätigungsanordnung 66 einen druckbeaufschlagbaren Steuerraum 70, in dem die Kupplerpatrone 24 derart gelagert ist, dass sich diese durch Druckaufbau innerhalb des Steuerraums 70 in die Auswurfposition 62 drängen lässt. Der Steuerraum 70 ist baulich in das Kupplergehäuse 22 integriert, wobei die Kupplerpatrone 24 einen an den Steuerraum 70 angrenzenden druckbetätigbaren Kolben bildet. Der Druckaufbau innerhalb des Steuerraums 70 erfolgt hydraulisch und liegt typischerweise in der Größenordnung von 1 bis 2 bar.

Zum Druckaufbau lässt sich ein mittels einer Druckquelle 72 vorspannbarer Membranspeicher 74 über ein von der Steueranordnung 68 auslösbares Aktivierungsventil 76 mit dem Steuerraum 70 der Betätigungsanordnung 66 druckverbinden. Bei der Druckquelle 72 handelt es sich beispielsgemäß um eine mit Hydraulikflüssigkeit aus einem Hydraulikreservoir 78 des landwirtschaftlichen Traktors 12 gespeiste Pumpe 80. Ein in das Hydraulikreservoir 78 mündendes Druckregelventil 82 gewährleistet die Einhaltung eines vorgegebenen Maximaldrucks beim Vorspannen bzw. Befüllen des Membranspeichers 74. Ein Rückschlagventil 84 verhindert einen Rückfluss von Hydraulikflüssigkeit beim Abschalten der Pumpe 80.

In den Steuerraum 70 münden erste und zweite Leitungen 86, 88, wobei sich die erste Leitung 86 als Zulauf über ein Drosselventil 90 sowie das Aktivierungsventil 76 mit dem Membranspeicher 74 und die zweite Leitung 88 als Rücklauf über ein druckbetätigbares Ablassventil 92 mit dem Hydraulikreservoir 78 druckverbinden lässt. Das Drosselventil 90 dient unter anderem der gezielten Begrenzung des im Steuerraum 70 beim Öffnen des Aktivierungsventils 76 aufgebauten Druckgradienten, mithin der beim Auswerfen des Hydrauliksteckers 16 auftretenden kinetischen Energie.

Mittels der Steueranordnung 68 ist eine Abreißsicherung verwirklicht. Die Steueranordnung 68 umfasst kontaktlose Abstandssensoren 94 zur Erkennung einer Abstandsüberschreitung zwischen landwirtschaftlichem Traktor 12 und Ladewagen 38. Tritt eine solche auf, ist von einem Verlust der mechanischen Anhängeverbindung 40 auszugehen.

Die Abstandssensoren 94 sind vorliegend als Ultraschallsensoren ausgebildet. Alternativ kann es sich jedoch auch um Radarsensoren, Kameras oder dergleichen handeln. Die von den Abstandssensoren 94 bereitgestellten Informationen werden von einer von der Steueranordnung 68 umfassten Kontrolleinheit 96 ausgewertet sowie in einen zur Auslösung des Aktivierungsventils 76 geeigneten Auslösebefehl umgesetzt. Zur Ansteuerung des Aktivierungsventils 76 ist eine von der Kontrolleinheit 96 elektrisch betätigbare Magnetspule 98 vorgesehen. Allgemein gesprochen erfolgt die Erzeugung des Auslösebefehls seitens der Steueranordnung 68 in Abhängigkeit eines sensorisch erfassten Kupplungszustands der mechanischen Anhängeverbindung 40 zwischen dem landwirtschaftlichen Traktor 12 und dem Ladewagen 38.

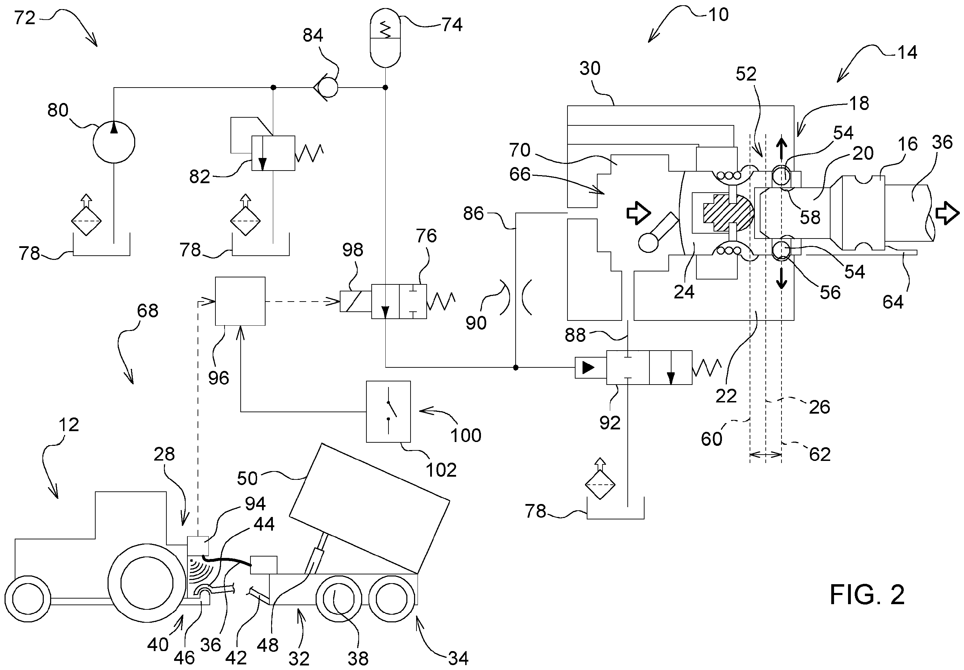

Eine solche Situation ist in Fig. 2 zu sehen, in der die in Fig. 1 dargestellte Anordnung 10 beim Auslösen der Abreißsicherung gezeigt ist. Wird aufgrund der von den Abstandssensoren 94 bereitgestellten Informationen auf einen Verlust der mechanischen Anhängeverbindung 40 geschlossen, so öffnet die Kontrolleinheit 96 das Aktivierungsventil 76 durch Betätigung der Magnetspule 98, um die Druckverbindung vom Membranspeicher 74 in Richtung des Drosselventils 90 sowie des druckbetätigbaren Ablassventils 92 freizugeben. Aufgrund des Strömungswiderstands des Drosselventils 90 tritt an letzterem eine Druckdifferenz auf, die derart bemessen ist, dass das Ablassventil 92 geschlossen wird. Zum Druckaufbau innerhalb des Steuerraums 70 wird somit einerseits der durch die erste Leitung 86 gebildete Zulauf durch Öffnen des Aktivierungsventils 76 freigegeben sowie andererseits der durch die zweite Leitung 88 gebildete Rücklauf durch Schließen des Ablassventils 92 gesperrt.

Die Entladung des Membranspeichers 74 in den Steuerraum 70 erfolgt unmittelbar mit Öffnen des Aktivierungsventils 76, sodass ein weitgehend verzögerungsfreies Auswerfen des Hydrauliksteckers 16 und damit ein verlässlicher Schutz des an dem Schnellkuppler 14 angeschlossenen Hydraulikschlauchs 36 vor übermäßigen Zugkräften sichergestellt ist.

Die Anordnung 10 lässt sich - abgesehen von der Verwirklichung einer verbesserten Abreißsicherung - auch dahingehend nutzen, einen Bediener beim Lösen der Kupplungsverbindung aktiv zu unterstützen. Hierzu ist die Betätigungsanordnung 66 zusätzlich auf Wunsch des Bedieners manuell ansteuerbar. Die Ansteuerung erfolgt in diesem Fall bei Erkennung eines über ein erstes Eingabeelement 100 geäußerten Bedienerwunsches, über das ein zur Auslösung des Aktivierungsventils 76 vorgesehener Auslösebefehl unabhängig vom Eingreifen der Abreißsicherung initiierbar ist. Bei dem ersten Eingabeelement 100 handelt es sich um einen im Bereich des Steuergeräts 30 angeordneten ersten Taster 102, dessen Betätigungssignale der Kontrolleinheit 96 zur Erzeugung des an die Betätigungsanordnung 66 zu übermittelnden Auslösebefehls zugeführt werden. In diesem Fall erübrigt sich die Verwendung eines Auswurfhebels, wie er bei gängigen Schnellkupplern vorgesehen ist.

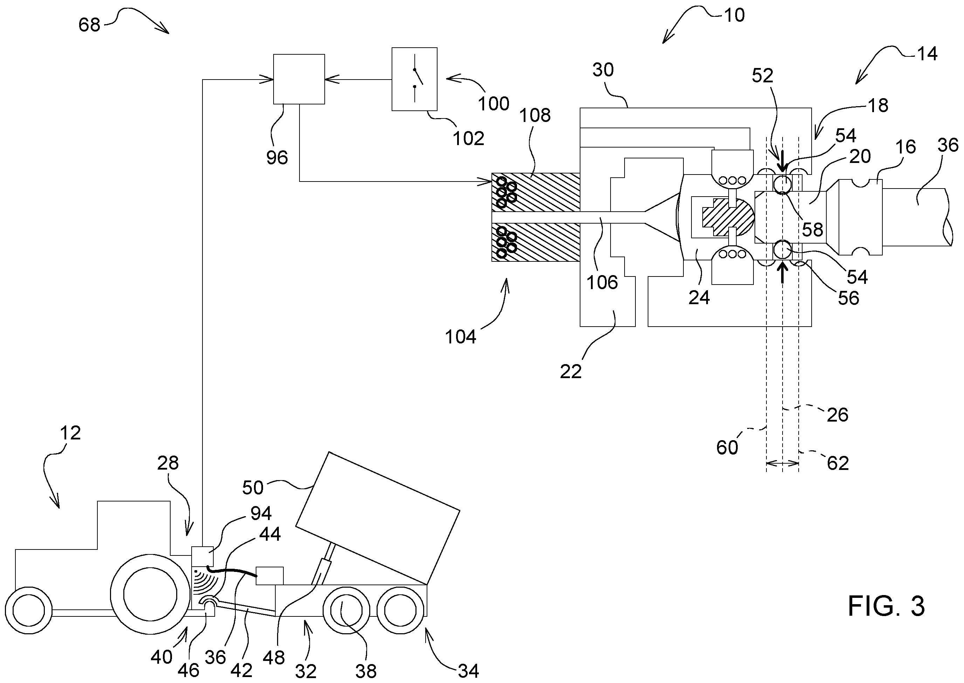

Fig. 3 zeigt eine schematische Darstellung der erfindungsgemä-ßen Anordnung entsprechend einer zweiten Ausgestaltung.

Demgemäß umfasst die Betätigungsanordnung 66 zur Verwirklichung der Abreißsicherung einen seitens der Kontrolleinheit 96 ansteuerbaren elektrischen Stellgeber 104, mittels dessen sich die Kupplerpatrone 24 in die Auswurfposition 62 drängen lässt. Der elektrische Stellgeber 104 weist eine mit der Kupplerpatrone 24 in Verbindung stehende Polstange 106 auf, die die Kupplerpatrone 24 durch entsprechende Bestromung einer die Polstange 106 koaxial umgebenden Magnetspule 108 in Richtung der Auswurfposition 62 auslenkt. Die Ansteuerung des elektrischen Stellgebers 104 erfolgt seitens der Kontrolleinheit 96 nach Maßgabe des von der Steueranordnung 68 erzeugten Auslösebefehls.

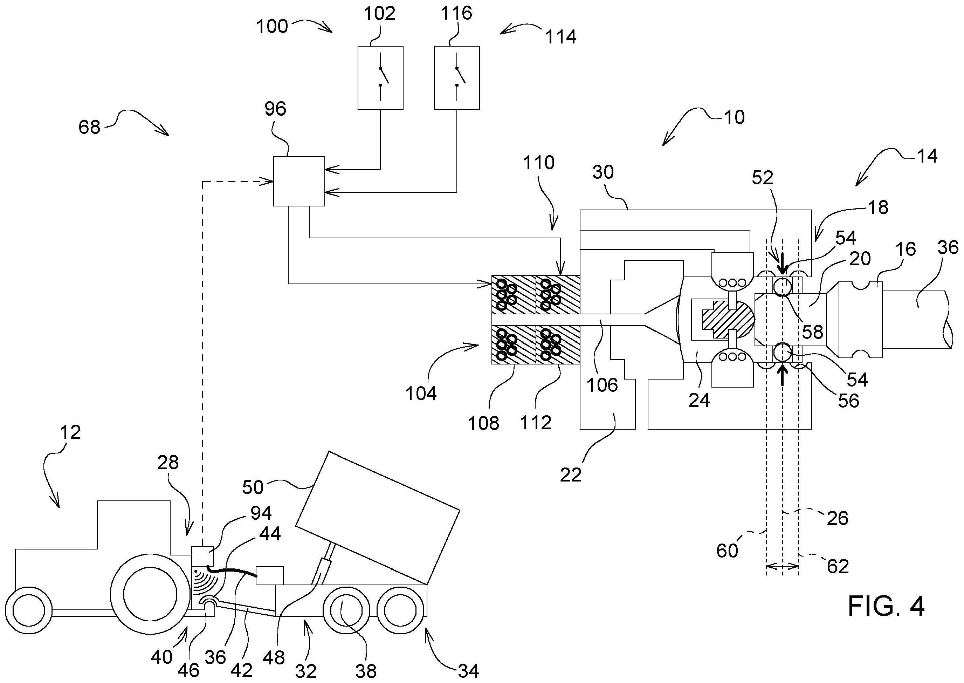

Um den Bediener bei der Herstellung der Kupplungsverbindung aktiv zu unterstützen, ist gemäß Fig. 4 entsprechend einer Variante der in Fig. 3 dargestellten zweiten Ausgestaltung der Anordnung 10 vorgesehen, dass die Betätigungsanordnung 66 einen weiteren elektrischen Stellgeber 110 aufweist, mittels dessen sich die Kupplerpatrone 24 in die beim Einstecken des Hydrauliksteckers 16 zu überwindende Übergangsposition 60 drängen lässt. Der weitere elektrische Stellgeber 110 umfasst zu diesem Zweck eine weitere Magnetspule 112, die ihrerseits die Polstange 106 koaxial umgibt und diese mitsamt der Kupplerpatrone 24 durch entsprechende Bestromung unter Verringerung der aufzubringenden Steckkraft in Richtung der Übergangsposition 60 auslenkt. Die Ansteuerung des weiteren elektrischen Stellgebers 110 erfolgt seitens der Kontrolleinheit 96 bei Erkennung eines über ein zweites Eingabeelement 114 geäußerten Bedienerwunsches. Bei dem zweiten Eingabeelement 114 handelt es sich um einem im Bereich des Steuergeräts 30 angeordneten zweiten Taster 116, dessen Betätigungssignale der Kontrolleinheit 96 zur Ansteuerung des weiteren elektrischen Stellgebers 110 zugeführt werden.

## Patentansprüche

1. Anordnung zum Lösen einer Kupplungsverbindung eines hydraulischen Schnellkupplers, mit einer Hydraulikkupplung (18) zur Aufnahme eines Hydrauliksteckers (16), wobei die Hydraulikkupplung (18) ein Kupplergehäuse (22) sowie eine darin verschiebbar gelagerte Kupplerpatrone (24) aufweist, die beim Einstecken des Hydrauliksteckers (16) eine die Hydraulikkupplung (18) verriegelnde Betriebsposition (26) einnimmt, wobei ferner eine Betätigungsanordnung (66) vorhanden ist, mittels derer die Kupplerpatrone (24) auf Veranlassung einer Steueranordnung (68) fremdkraftbetätigt aus der Betriebsposition (26) in eine den Hydraulikstecker (16) freigebende Auswurfposition (62) verbringbar ist, **dadurch gekennzeichnet, dass** die Betätigungsanordnung (66) einen druckbeaufschlagbaren Steuerraum (70) umfasst, in dem die Kupplerpatrone (24) derart gelagert ist, dass sich diese durch Druckaufbau innerhalb des Steuerraums (70) in die Auswurfposition (62) drängen lässt.

2. Anordnung nach Anspruch 1, **dadurch gekennzeichnet, dass** sich zum Druckaufbau ein mittels einer Druckquelle (72) vorspannbarer Membranspeicher (74) über ein von der Steueranordnung (68) auslösbares Aktivierungsventil (76) mit dem Steuerraum (70) der Betätigungsanordnung (66) druckverbinden lässt.

3. Anordnung nach Anspruch 2, **dadurch gekennzeichnet, dass** in den Steuerraum (70) erste und zweite Leitungen (86, 88) münden, wobei sich die erste Leitung (86) als Zulauf über ein Drosselventil (90) sowie das Aktivierungsventil (76) mit dem Membranspeicher (74) und die zweite Leitung (88) als Rücklauf über ein Ablassventil (92) mit einem Hydraulikreservoir (78) druckverbinden lässt.

4. Anordnung nach Anspruch 3, **dadurch gekennzeichnet, dass** das Ablassventil (92) mittels eines beim Auslösen des Aktivierungsventils (76) am Drosselventil (90) auftretenden Differenzdrucks derart betätigt wird, dass der durch die zweite Leitung (88) gebildete Rücklauf in Richtung des Hydraulikreservoirs (78) geschlossen wird.

5. Anordnung nach wenigstens einem der Ansprüche 1 bis 4, **dadurch gekennzeichnet, dass** die Steueranordnung (68) die Betätigungsanordnung (66) nach Maßgabe eines auf eine drohende mechanische Überlastung der Kupplungsverbindung hinweisenden Auslösebefehls ansteuert.

6. Anordnung nach Anspruch 5, **dadurch gekennzeichnet, dass** die Erzeugung des Auslösebefehls seitens der Steueranordnung (68) in Abhängigkeit eines sensorisch erfassten Kupplungszustands einer mechanischen Anhängeverbindung (40) zwischen einem landwirtschaftlichen Traktor (12) und einem gezogenen Arbeitsgerät (38) erfolgt.

7. Anordnung nach wenigstens einem der Ansprüche 1 bis 6, **dadurch gekennzeichnet, dass** die Betätigungsanordnung (66) manuell ansteuerbar ist.

## Claims

1. Arrangement for releasing a coupling connection of a hydraulic quick coupler, having a hydraulic coupling (18) for receiving a hydraulic plug (16), wherein the hydraulic coupling (18) has a coupler housing (22) and a coupler cartridge (24) which is mounted displaceably therein and which assumes an operating position (26), in which the hydraulic coupling (18) is locked, when the hydraulic plug (16) is plugged in, wherein provision is furthermore made of an actuation arrangement (66), by means of which the coupler cartridge (24) is able to be brought, in a manner actuated by external force, from the operating position (26) into an ejection position (62), in which the hydraulic plug (16) is released, at the instigation of a control arrangement (68), **characterized in that** the actuation arrangement (66) comprises a control chamber (70) which is able to be pressurized and in which the coupler cartridge (24) is mounted in such a way that it can be pushed into the ejection position (62) by way of a build-up of pressure within the control chamber (70).

2. Arrangement according to Claim 1, **characterized in that**, for build-up of pressure, a diaphragm accumulator (74) able to be prestressed by means of a pressure source (72) can be connected in terms of pressure to the control chamber (70) of the actuation arrangement (66) via an activation valve (76) which is triggerable by the control arrangement (68) .

3. Arrangement according to Claim 2, **characterized in that** first and second lines (86, 88) open out into the control chamber (70), wherein the first line (86) can, as a feed line, be connected in terms of pressure to the diaphragm accumulator (74) via a throttle valve (90) and via the activation valve (76), and the second line (88) can, as a return line, be connected in terms of pressure to a hydraulic reservoir (78) via a drain valve (92).

4. Arrangement according to Claim 3, **characterized in that** the drain valve (92) is actuated by means of a differential pressure, occurring at the throttle valve (90) in the event that the activation valve (76) is triggered, in such a way that the return line, formed by the second line (88), is closed in the direction of the hydraulic reservoir (78).

5. Arrangement according to at least one of Claims 1 to 4, **characterized in that** the control arrangement (68) activates the actuation arrangement (66) in accordance with a triggering command indicating an impending mechanical overload of the coupling connection.

6. Arrangement according to Claim 5, **characterized in that** the generation of the triggering command by the control arrangement (68) is realized in a manner dependent on a sensor-detected coupling state of a mechanical hitching connection (40) between an agricultural tractor (12) and a towed working implement (38).

7. Arrangement according to at least one of Claims 1 to 6, **characterized in that** the actuation arrangement (66) is manually activatable.

## Revendications

1. Agencement permettant de libérer une liaison d'accouplement d'un dispositif hydraulique d'accouplement rapide, comprenant un accouplement hydraulique (18) pour recevoir un connecteur hydraulique (16), dans lequel l'accouplement hydraulique (18) présente un carter d'accouplement (22) ainsi qu'une cartouche d'accouplement (24) montée mobile dans celui-ci et qui occupe à l'insertion du connecteur hydraulique (16) une position de fonctionnement (26) verrouillant l'accouplement hydraulique (18), dans lequel en outre un agencement d'actionnement (66) est présent au moyen duquel la cartouche d'accouplement (24), à la demande d'un agencement de commande (68), peut être amenée de la position de fonctionnement (26) dans une position d'éjection (62), dans laquelle le connecteur hydraulique (16) est libéré, sous l'effet d'une force extérieure,
**caractérisé en ce que** l'agencement d'actionnement (66) comprend un espace de commande (70) pouvant être mis sous pression dans lequel la cartouche d'accouplement (24) est montée de telle sorte qu'elle peut être poussée dans la position d'éjection (62) par une montée en pression à l'intérieur de l'espace de commande (70).

2. Agencement selon la revendication 1, **caractérisé en ce que** pour la montée en pression, un accumulateur à membrane (74) pouvant être précontraint au moyen d'une source de pression (72) peut être relié en pression à l'espace de commande (70) de l'agencement d'actionnement (66) par l'intermédiaire d'une vanne d'activation (76) pouvant être déclenchée par l'agencement de commande (68).

3. Agencement selon la revendication 2, **caractérisé en ce que** des première et deuxième conduites (86, 88) débouchent sur l'espace de commande (70), dans lequel la première conduite (86) peut être reliée en pression à l'accumulateur à membrane (74) comme une arrivée par l'intermédiaire d'une vanne d'étranglement (90) ainsi que de la vanne d'activation (76), et la deuxième conduite (88) peut être reliée en pression à un réservoir hydraulique (78) comme un retour par l'intermédiaire d'une vanne d'évacuation (92).

4. Agencement selon la revendication 3, **caractérisé en ce que** la vanne d'évacuation (92) est actionnée au moyen d'une pression différentielle apparaissant au niveau de la vanne d'étranglement (90) lors du déclenchement de la vanne d'activation (76) de telle sorte que le retour formé par la deuxième conduite (88) est fermé en direction du réservoir hydraulique (78).

5. Agencement selon au moins l'une des revendications 1 à 4, **caractérisé en ce que** l'agencement de commande (68) pilote l'agencement d'actionnement (66) conformément à une instruction de déclenchement signalant une surcharge mécanique imminente de la liaison d'accouplement.

6. Agencement selon la revendication 5, **caractérisé en ce que** la génération de l'instruction de déclenchement de la part de l'agencement de commande (68) est effectuée en fonction d'un état d'accouplement détecté par capteur d'une liaison de remorquage mécanique (40) entre un tracteur agricole (12) et un outil de travail tracté (38).

7. Agencement selon au moins l'une des revendications 1 à 6, **caractérisé en ce que** l'agencement d'actionnement (66) peut être piloté manuellement.
